Europäisches Patentamt

**European Patent Office**

Office européen des brevets

(19)

(11) Veröffentlichungsnummer: **0 192 749**
**B1**

(12) **EUROPÄISCHE PATENTSCHRIFT**

(45) Veröffentlichungstag der Patentschrift:
**07.12.88**

(51) Int. Cl.⁴: **F 16 C 43/06**

(21) Anmeldenummer: **85904598.1**

(22) Anmeldetag: **05.09.85**

(86) Internationale Anmeldenummer:
**PCT/DE 85/00308**

(87) Internationale Veröffentlichungsnummer:
**WO 86/01566 (13.03.86** Gazette 86/6)

(54) **ZYLINDERROLLENLAGER.**

(30) Priorität: **05.09.84 DE 8426143 U**

(43) Veröffentlichungstag der Anmeldung:
**03.09.86 Patentblatt 86/36**

(45) Bekanntmachung des Hinweises auf die Patenterteilung:
**07.12.88 Patentblatt 88/49**

(84) Benannte Vertragsstaaten:
**DE FR GB**

(56) Entgegenhaltungen:
**DE-A- 2 407 477**
**FR-A- 2 107 574**
**FR-A- 2 279 971**
**US-A- 1 970 699**
**US-A- 4 325 591**
**US-A- 4 336 971**

(73) Patentinhaber: **SKF GmbH,**
**Ernst-Sachs-Strasse 2-8 Postfach 1440,**
**D-8720 Schweinfurt (DE)**

(72) Erfinder: **Jacob, Werner, Briandring 29,**
**D-6000 Frankfurt/Main 70 (DE)**

(74) Vertreter: **Seibert, Rudolf, Dipl.-Ing. et al,**
**Rechtsanwälte Seibert & Partner Tattenbachstrasse 9,**
**D-8000 München 22 (DE)**

ACTORUM AG

## Beschreibung

Die Erfindung bezieht sich auf ein ein- oder mehrreihiges Zylinderrollenlager, das aus einstükkigen inneren und äusseren, mit Aussenborden versehenen Laufringen besteht, von denen mindestens einer eine Einfüllnut aufweist und bei dem Mittel vorgesehen sind, welche das Zurückfallen einer Zylinderrolle in die Einfüllnut verhindern.

Je nach dem Verwendungszweck sind diese Lager unterschiedlich ausgebildet. Sie benötigen aber immer Mittel, um eine achsparallele Führung der Zylinderrollen zu gewährleisten. Die Loslager dieser Art kommen mit einem Aussenlaufring mit zwei Borden und einem bordlosen Innenlaufring oder umgekehrt aus. Bei Zylinderrollenlagern aber, die als Festlager zur Aufnahme wechselseitig wirkender Axialkräfte verwendet werden, bestehen die Lagerringe bisher aus drei Teilen.

Um diese mit Zylinderrollen bestücken zu können, muss nämlich der eine Laufring mit zwei und der andere mit einem festen Bord versehen sein, so dass die Zylinderrollen einglegt werden können. Als vierter Bord für den einbordigen Laufring wird dann entweder eine lose Bordscheibe oder ein Winkelring angesetzt; eine andere Möglichkeit, dieses Problem zu lösen, besteht darin, die Laufringe einstückig mit festen Borden herzustellen, einen der Ringe dann aber zu sprengen und die beiden Ringteile mit zusätzlichen Haltemitteln nach dem Einsetzen der Zylinderrollen zusammenzuhalten.

Einen Versuch, diese Schwierigkeiten zu überwinden, zeigt die US-A-1 212 253, bei welchem die Mittel, die das Zurückfallen der Zylinderrollen in die Einfüllnut verhindern sollen, aus einem Spreizring bestehen. Diese Lösung hat den Nachteil, dass bei gleichen Ausmassen des Lagers die Zylinderrollen um das Mass des Spreizrings kürzer sein müssen. Die Tragfähigkeit solcher Lager ist also geringer als sie bei Lagern ohne Spreizring ist. Ein weiterer Nachteil dieses Spreizrings besteht darin, dass Einstich und Spreizring mit äusserster Genauigkeit hergestellt werden müssen, da der Spreizring ja die Bordführung der Zylinderrollen übernehmen muss; ein sehr aufwendiges Vorgehen, das industriell nicht durchführbar ist, weil der Spreizring exakte Führung der Laufrollen garantiert.

Durch die DE-A-24 07 477 ist ein Wälzlager bekannt geworden, bei dem beide Lagerringe mit einstückig mit diesen ausgebildeten Borden versehen sind, die an einer Stelle Einfüllöffnungen für die Wälzkörper aufweisen. Diese Einfüllöffnungen werden durch bestimmte Verschlussstücke, die nach dem Fertigbearbeiten der Lagerringe von den Seitenborden der Lagerringe abgetrennt werden, verschlossen. Bei der vorbekannten Ausführungsform ist zur Realisierung ein erheblicher Arbeitsaufwand notwendig, weil nämlich zunächst eine Rille eingefräst, eine Bohrung vorgesehen, eine Ringnut eingearbeitet, das Verschlussstück abgesprengt, herausgenommen und nach Bestücken wieder eingesetzt, dann ein Stift eingesetzt werden müssen. Alternativ hierzu kann das Verschlussstück auch mittels eines in den Seitenbord eingesetzten Halterings in Form eines Drahtrings oder einer auf dem Mantel des Seitenbords sitzenden Dichtscheibe in seiner Lage gehalten werden, so dass der Haltering indirekt in der offen liegenden Stirnfläche der Zylinderrollen anliegt.

Der Erfindung ist die Aufgabe gestellt, einfache und dennoch zuverlässige Mittel zu finden, die das Zurückfallen der Zylinderrollen in die Einfüllnut verhindern und sowohl bei offenen wie geschlossenen Lagern anwendbar sind.

Diese Aufgabe wird gemäss der Erfindung durch Verwendung eines Halterings gelöst, der, auf einem der Borde aufliegend, gegen die in der Einfüllnut offen liegende Stirnfläche der Zylinderrolle anliegend im Lager fixierbar ist.

Bei dem Wälzlager nach der Erfindung ist also kein Verschlussstück vorgesehen. Vielmehr wird ein Zurückfallen der Wälzkörper in die Einfallnut mittels eines Halterings verhindert, der nicht notwendigerweise die Einfüllnut verschliesst, weshalb ein Aufwand wie vorstehend an Hand des vorbekannten Wälzlagers beschrieben, bei dem Zylinderrollenlager nach der Erfindung nicht getrieben zu werden braucht.

Das Prinzip nach der Erfindung lässt sich in vielen Variationen verwirklichen. Insbesondere bei nach aussen offenen Lagern ist der Haltering als in sich geschlossener Ring, aus federnde Eigenschaften aufweisendem Material bestehend, ausgebildet, der so weit gegen die Zylinderrollen eingedrückt wird, dass er direkt gegen die Stirnfläche der Zylinderrollen anliegt. Die federnden Eigenschaften sollten dabei so beschaffen sein, dass er sich beim Einschieben dehnt, zurückfedert, sich dabei gegebenenfalls auch der Bordform anpasst und auf ihm fest und unverrückbar fixiert ist.

Bei nach aussen geschlossenen, also abgedichteten Lagern kann das vorgesehene Prinzip so gestaltet werden, dass Halte- und Dichtungsring miteinander verbunden oder einstückig miteinander, z. B. aus Kunststoff, ausgebildet sind. Dabei kann der Haltering aus verstärktem, der Dichtungsring aus weicherem Kunststoff bestehen. Auch kann bei abgedichteten Lagern der Dichtungsring auf den Haltering aufgesetzt werden, wobei der Haltering mit einer abgewinkelten Kante zur Sicherung des Dichtungsringes dient.

Bei mit dem Dichtungsring verbundenem Haltering braucht dieser nicht direkt gegen die Stirnfläche der Zylinderrollen anzuliegen, sondern er kann mit dem Dichtungsring so verbunden sein, dass er indirekt über Teile des Dichtungsrings die Zylinderrollen im Bereich der Einfüllnut gegen Herausfallen sichert.

Die Fixierung des Halte- oder/und Dichtungsrings auf einem der Borde ist ebenfalls variierbar. Bei offenen Lagern kann der geschlossene Haltering aufgeschrumpft bzw. unter Vorspannung eingedrückt werden. Insbesondere bei konvex gestalteter Kontaktfläche des Bordes mit dem Haltering ist eine exakte und auch beanspruchbare Fixierung des Halterings gewährleistet. Ein oder mehrere Einstichnuten sind insbesondere für die Fixierung des aus Kunststoff bestehenden Dichtungsringes vorteilhaft, dessen Kaltfliessfähigkeit bzw. Elastizität gegebenenfalls einen Gegennokken entbehrlich macht.

Die Integrierung von Halte- und Dichtungsring kann nach einem weiteren Merkmal der Erfindung auf besonders einfache Weise durch einen Zwei-Komponenten-Werkstoff erreicht werden, indem eine den Haltering bildende Zone dieses Dichtungsrings aus härterem Kunststoff besteht als der Dichtungsring.

Nach einem weiteren Merkmal der Erfindung kann die Einfüllnut durch ein Füllstück verschlossen sein, das über den Haltering gegen die Stirnfläche der Zylinderrollen anliegend in der Einfüllnut fixiert ist.

Bei abgedichteten Lagern können nach einem weiteren Merkmal der Erfindung Dichtungsring, Haltering und Füllstück als bauliche Einheit an das Lager ansetzbar angeführt sein.

Die Erfindung betrifft nicht nur das Zylinderrollenlager, sondern sie hat auch ein Verfahren zum Gegenstand, mit dem der Haltering und gegebenenfalls auch der Dichtungsring so aufgebracht werden, dass einer von ihnen oder das Füllstück mit der den Zylinderrollen zuweisenden Kante genau parallel und auf genau gleicher Höhe des Führungsbordes liegt. Dies geschieht nach der Erfindung so, dass der Haltering und/oder der Dichtungsring bzw. das Füllstück in achsparalleler Richtung unter Vermeidung axialen Spieles durch Abstützung der Lagerseite bis zu den fest am Bord anliegenden Zylinderrollen eingeschoben wird.

Diese und weitere Merkmale der Erfindung gehen aus den Ansprüchen und den schematisch dargestellten Ausführungsbeispielen der Erfindung hervor; es zeigen:

Fig. 1 einen Schnitt durch ein zweireihiges, vollrolliges und nach aussen offenes Zylinderrollenlager mit Einfüllnut und Haltering,

Fig. 2 die Seitenansicht dieses Lagers im Ausschnitt,

Fig. 3 das Anfangsstadium der Lagermontage,

Fig. 4 das Einfüllen der beiden Zylinderrollen nach Zusammenschieben der beiden Laufringe,

Fig. 5 das Einpressen des geschlossenen Halterings unter Ausschaltung des axialen Spiels des Lagers,

Fig. 6 eine nach aussen offene Laufrolle mit einer Zylinderrollenlaufbahn mit eingepresstem Haltering,

Fig. 7 einen mit einem Dichtungsring kombinierten Haltering, der aus einem Zwei-Komponenten-Kunststoff besteht,

Fig. 8 eine Kombination aus Dichtungs- und Haltering und einem gesonderten Füllstück,

Fig. 9 die Ansicht dieses Lagerteils mit dem durch Pfeile dargestellten Reibungsdruck auf das Füllstück,

Fig. 10 eine Ausführungsform der Erfindung, bei welcher der Haltering indirekt gegen die Stirnfläche der Zylinderrollen anliegt und das Füllstück ebenfalls aus verstärktem Kunststoff besteht,

Fig. 11 eine dreiteilige Kombination zwischen Dichtungs-Haltering und Füllstück, wobei das Füllstück aus dem Material der Dichtung besteht,

Fig. 12 ein nach aussen offenes Lager mit von der Ebene abweichender Bordoberfläche und

Fig. 13 eine weitere Ausführung des offenen Lagers mit indirektem Haltering und Füllstück, wobei das Füllstück aus verschiedenen Materialien bestehen kann und noch einen zusätzlichen axialen Schutz z. B. durch eine Haltenase erhalten kann.

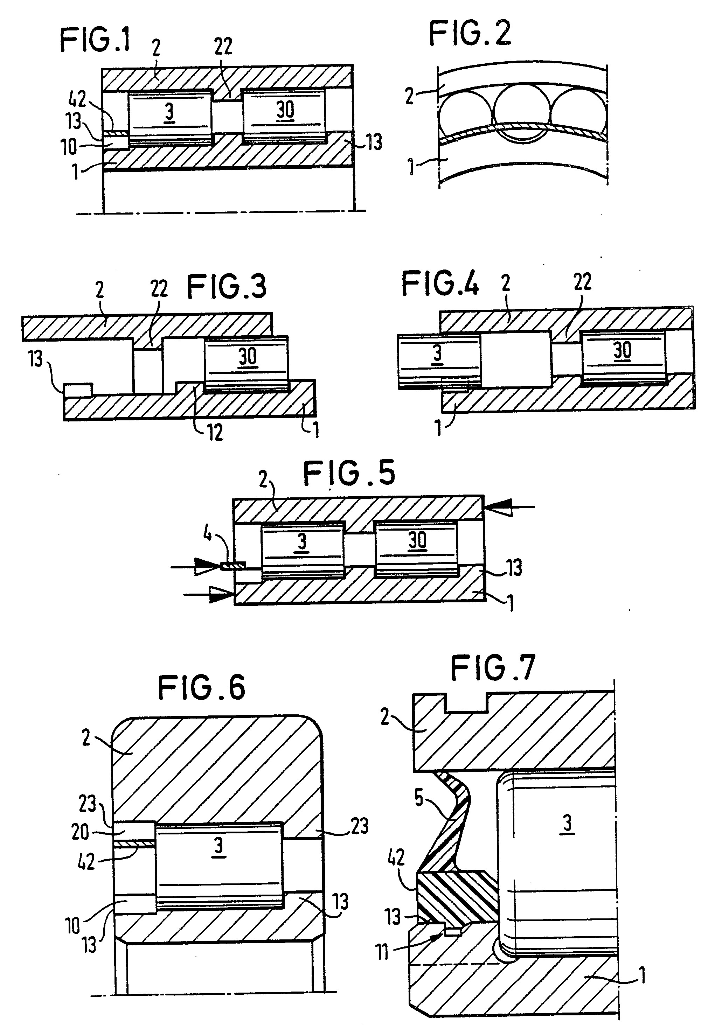

Das zweireihige Zylinderrollenlager nach der Erfindung ist bei allen in den Zeichnungen dargestellten Ausführungsformen so ausgebildet, wie es in den Fig. 1 bis 5 dargestellt ist. Es besteht aus den beiden Laufringen 1 und 2, von denen der innere Laufring zwei Aussenborde 13 und einen Mittelbord 12 und der äussere Laufring einen mittleren Bord 22 aufweisen. Überwiegend weist nur einer der Borde, nämlich der Bord 13 eine Einfüllnut 10 auf. Hat auch der äussere Laufring einen Aussenbord 23, wie es in Fig. 6 dargestellt ist, können beide Aussenborde 13, 23 je eine Einfüllnut mit dem Zylinderrollendurchmesser angepasster Kontur aufweisen.

Die Montage des in Fig. 1 bis 5 gezeigten Zylinderrollenlagers erfolgt so, dass zunächst die Zylinderrollen 30 in die Laufbahn des inneren Laufringes 1 eingelegt werden. Danach wird der äussere Laufring 2 über die vollbestückte Laufbahn geschoben (Fig. 3) und die Zylinderrollen 3 werden einzeln durch die Einfüllnute 10 in bekannter Weise eingesetzt, bis auch diese Laufbahn voll bestückt ist.

Anschliessend wird der Haltering 4 unter Vorspannung auf den Bord 13 aufgeschoben und in achsparalleler Richtung so weit nach innen gedrückt, bis er gegen die Stirnfläche der Zylinderrollen anliegt. Während dieses Vorganges ist das axiale Spiel des Lagers durch Verspannen des Innen- und Aussenrings ausgeschaltet, was durch die Pfeile in Fig. 5 angedeutet ist.

Der Haltering 4 kann aus einem flachen Stahlband gebogen und verschweisst werden, er wird dann unter Druck auf den Bord 13 aufgepresst. Dabei soll er sich dehnen und nach Erreichen der Endstellung der Bordform anpassen, womit ein fester Sitz gewährleistet ist.

Dieses in den Fig. 1 bis 5 gezeigte Zylinderrollenlager ist als vollbestücktes Lager absolut selbsthaltend, kann nach der Montage nicht auseinanderfallen, keine der Zylinderrollen kann sich aus ihrer Laufbahn heraus verschieben.

In Fig. 6 ist eine einreihige Laufrolle dargestellt. Deshalb weist der äussere Laufring 2 eine grössere Wandstärke und zwei Aussenborde 23 auf. Ferner ist in den Borden 13 und 23 je eine Einfüllnute 10 und 20 vorgesehen. Im Gegensatz zu dem zuerst beschriebenen Ausführungsbeispiel wird der Haltering 42 auf den Bord 23 des äusseren Laufrings 2 in der vorbeschriebenen Art aufgezogen.

In Fig. 7 ist ein nach aussen abgedichtetes Lager im Ausschnitt dargestellt, bei welchem der Haltering 42 aus einem Kunststoff, z. B. aus einem verstärkten Polyamid besteht und mit einem Dichtungsring 5 kombiniert ist. Beide Teile 5 und 42 können integriert sein, wobei der Dichtungsring 5 aus weicherem Material, z. B. Polyurethanelastomer besteht.

Das Einpressen unter Vorspannung dieses mit einem Dichtungsring 5 kombinierten Halterings 42 erfolgt nach Art der Fig. 3 bis 5. Dabei zentriert sich der Haltering 42 von selbst und fliesst in den Einstich 11 des inneren Laufrings ein.

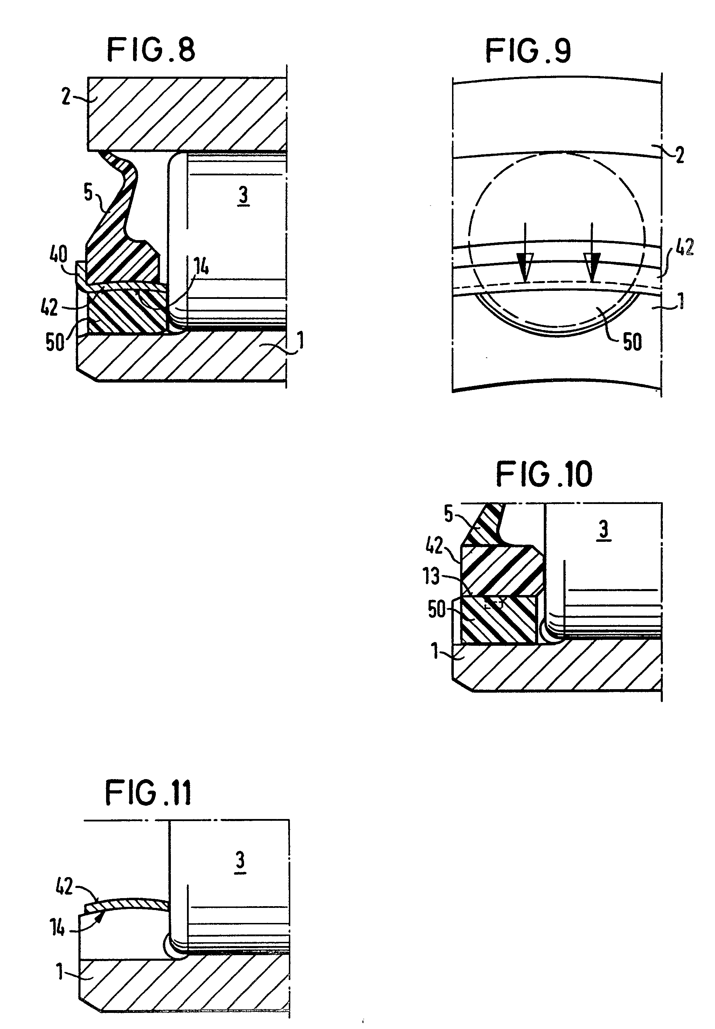

Im Ausführungsbeispiel der Fig. 8 und 9 ist eine weitere Ausführung eines nach aussen abgedichteten Lagers dargestellt. Der Haltering 42 ist hier mit einer abgewinkelten Kante 40 gezeigt, der Dichtungsring 5 wird vor der Montage auf den Haltering aufgesetzt und mit diesem eingepresst.

Das Füllstück 50 braucht keine besondere Halterung, es wird durch den Reibungsdruck des Halterings 42 gehalten.

In Fig. 10 ist eine andere Kombination zwischen diesen Teilen dargestellt. Der Dichtungsring 5 aus weichem Material ist mit dem aus hartem Kunststoff bestehenden Haltering 41 fest verbunden. Dabei ist diese Kombination so ausgelegt, dass der aus Kunststoff bestehende Haltering 41 nur indirekt die Halterung der Zylinderrollen 3, nämlich über das Füllstück 50, übernimmt. Durch die konkav oder konvex gestaltete Kontaktfläche 14 ist die Halterung des Füllstückes 50 gewährleistet. Sie kann auch nach der Montage auf einfache Weise mit dem Haltering verschweisst werden.

Bei der Ausführungsform der Fig. 11 übernimmt der Haltering 42 die Sicherung der Zylinderrollen 3 (wie in Fig. 7). Das Füllstück 50 besteht aus weichem Dichtmaterial und wird auch hier über den Reibungsdruck des Halterings gehalten.

In den Fig. 12 und 13 sind noch einmal offene Lager mit einem Haltering aus geschlossenem Bandmaterial dargestellt. Bei der Ausführung nach Fig. 12 ist der Haltering 42 auf die gewölbte Oberfläche 14 des Bordes 13 aufgeschoben. Allein dadurch wird er ausreichend in seiner direkten Anlage an der Stirnfläche der Zylinderrollen 3 fixiert.

Eine gleiche Ausführung ist auch bei indirekter Anlage des Halterings 41 an der Stirnfläche der Zylinderrollen 3 möglich. Fig. 13 zeigt einen Haltering 41 mit einer Tasche 43 und einer Nase am Fülltisch 50, die die Verbindung zwischen Haltering 41 und Füllstück 50 garantiert.

Die Details der einzelnen Ausführungsformen sind zum Teil austauschbar. Statt tiefere Einstiche 11 können andere Unebenheiten, aufgerauhte Flächen, Rippen o. dgl. vorgesehen sein. Die Auswahl und Art der Kombinationen hängen von der jeweiligen Lagertype ab.

In allen Ausführungsbeispielen ausser Fig. 6 ist der Haltering auf einen der Borde aufgezogen. Wie Fig. 6 zeigt, ist es also auch möglich, ihn innerhalb eines Bordes anzuordnen.

Bei mehrreihigen Lagern nach der Erfindung weist nur einer der Laufringe je zwei Aussenborde pro Zylinderrollenreihe auf. Sind mehr als zwei Laufbahnen vorgesehen, dann können alle Laufbahnen eines Laufringes bis auf eine voll bestückt werden, ehe der andere Laufring aufgeschoben wird, denn dieser braucht ja nur einen Bord.

## Patentansprüche

1. Ein- oder mehrreihiges Zylinderrollenlager, bestehend aus einstückigen, inneren und äusseren, mit Aussenborden (13, 23) versehenen Laufringen (1, 2), wobei mindestens einer der Aussenborde (13, 23) eine Einfüllnut (10, 20) aufweist und jeweils Mittel vorgesehen sind, welche das Zurückfallen der Rollen (3, 30) in die Einfüllnut (10, 20) verhindern, dadurch gekennzeichnet, dass diese Mittel aus einem Haltering (4; 40, 42) bestehen, der jeweils auf dem eine Einfüllnut aufweisenden Aussenbord (13, 23) aufliegend und direkt gegen die in der Einfüllnut (10, 20) offen liegende Stirnfläche der Zylinderrollen (3, 30) anliegend im Lager fixierbar ist.

2. Zylinderrollenlager nach Anspruch 1, dadurch gekennzeichnet, dass der Haltering (4; 40, 42) als in sich geschlossener Ring (4, 42) aus federnde Eigenschaften aufweisendem Material bestehend, ausgebildet ist.

3. Zylinderrollenlager nach Anspruch 1 oder 2, dadurch gekennzeichnet, dass, bei mittels eines Dichtungsrings (5) bzw. eines Einfüllstücks (50) abgedichtetem Lager, Halte- (4, 42) und Dichtungsring (5) bzw. Füllstück (50) miteinander verbunden sind.

4. Zylinderrollenlager nach einem oder mehreren der Ansprüche 1 bis 3, dadurch gekennzeichnet, dass der Haltering (4, 42) auf einem der Borde (13, 23) aufsitzt und die Oberfläche (11, 14) dieses Bordes (13, 23) uneben ist.

5. Zylinderrollenlager nach einem oder mehreren der Ansprüche 1 bis 4, dadurch gekennzeichnet, dass die Oberfläche (14) des einen Bordes (13, 23) konkav oder konvex gewölbt ist.

6. Zylinderrollenlager nach einem oder mehreren der Ansprüche 1 bis 5, dadurch gekennzeichnet, dass Haltering und Dichtungsring einstückig aus Kunststoff o. dgl. ausgebildet sind.

7. Zylinderrollenlager nach einem oder mehreren der Ansprüche 1 bis 6, dadurch gekennzeichnet, dass Halte- und Dichtungsring aus einem Zwei-Komponenten-Kunststoff bestehen, wobei ein Teil (5) aus weicherem und der den Haltering bildende Teil (42) aus härterem Kunststoff besteht.

8. Zylinderrollenlager nach einem oder mehreren der Ansprüche 1 bis 7, dadurch gekennzeichnet, dass bei abgedichteten Lagern Dichtungsring (5), Haltering (42) und Füllstück (50) als bauliche Einheit an das Lager ansetzbar sind.

9. Verfahren zur Herstellung eines Zylinderrollenlagers mit Absicherung der Zylinderrollen (3, 30) gegen deren axiale Verschiebung im Bereich einer Einfüllnut (10, 20) des oder der Laufringe (1, 2) des Lagers nach einem oder mehreren der Ansprüche 1 bis 8, dadurch gekennzeichnet, dass der Haltering (4, 42) und gegebenenfalls der Dichtungsring (5) bzw. das Füllstück (50) in achsparalleler Richtung unter Druck in das Lager so weit eingepresst werden, dass der Haltering mit der den Zylinderrollen (3) zugewandten Seite gegen die Stirnfläche der Zylinderrollen anliegt und in dieser Lager fixiert wird.

10. Verfahren nach Anspruch 9, dadurch gekennzeichnet, dass beim Einpressen des Halteringes (4, 42) sowohl auf diesen wie einen der Laufringe (1 oder 2) Druck in achsparalleler Richtung ausübt und der jeweils andere Laufring (1 oder 2) auf der Gegenseite abgestützt wird.

## Claims

1. A single-row or multi-row cylinder roller bearing comprising integral inner and outer lipped ball races (1, 2) where at least one of the lips (13, 23) contains a filler groove (10, 20) and where means are provided which prevent the rollers (3, 30) from falling back into the filler groove (10, 20) characterised in that these means consist of a retaining ring (4; 40, 42) which can be fixed in the bearing resting on the lip (13, 23) which contains a filler groove and in direct contact with the end faces of the cylinder rollers (3, 30) which is exposed in the filler groove (10, 20).

2. A cylinder roller bearing as claimed in Claim 1, characterised in that the retaining ring (4; 40, 42) is designed as a closed ring (4, 42) made of material which has spring properties.

3. A cylinder roller bearing as claimed in Claim 1 or Claim 2, characterised in that when the bearing is sealed by a sealing ring (5) and/or a filler component (50), retaining ring (4, 42), sealing ring (5) and filler component (50) are connected to one another.

4. A cylinder roller bearing as claimed in one or more of Claims 1 to 3, characterised in that the retaining ring (4, 42) rests on one of the lips (13, 23) and the surface (11, 14) of this lip (13, 23) is uneven.

5. A cylinder roller bearing as claimed in one or more of Claims 1 to 4, characterised in that the surface (14) of the one lip (13, 23) is curved so as to be concave or convex.

6. A cylinder roller bearing as claimed in one or more of the Claims 1 to 5, characterised in that retaining ring and sealing ring are integrally formed from synthetic material or the like.

7. A cylinder roller bearing as claimed in one or more of Claims 1 to 6, characterised in that retaining ring and sealing ring consist of a two-component synthetic material, where one part is composed of a softer synthetic material and the part (42) which forms the retaining ring is composed of a harder synthetic material.

8. A cylinder roller bearing as claimed in one or more of Claims 1 to 7, characterised in that when the bearings are sealed, the sealing ring (5) the retaining ring (42) and the filler component (50) can be applied to the bearing as a structural unit.

9. A method for the production of a cylinder roller bearing in which the cylinder rollers (3, 30) are protected from axial displacement in the region of a filler groove (10, 20) in the ball race or races (1, 2) of the bearing as claimed in one or more of the Claims 1 to 8, characterised in that the retaining ring (4, 42) and where appropriate the sealing ring (5) and the filler component (50) are impressed under pressure into the bearing in a direction parallel to the axis to such an extent that the side of the retaining ring which faces towards the cylinder rollers (3) contacts the end face of the cylinder rollers and is fixed in this position.

10. A method as claimed in Claim 9, characterised in that when the retaining ring (4, 42) is pressed in pressure is exerted in a direction parallel to the axis both upon the retaining ring and upon one of the ball races (1 or 2) and the respective other ball race (1 or 2) is supported on the opposite side.

## Revendications

1. Roulement à une ou plusieurs rangées de rouleaux cylindriques, constitué par des bagues de roulement intérieure et extérieure (1, 2), réalisées d'un seul tenant et des collets extérieurs (13, 23), et dans lequel au moins l'un des collets extérieurs (13, 23) comporte une rainure d'insertion (10, 20), et il est prévu des moyens qui empêchent que les rouleaux (3, 20) ne retombe dans la rainure d'insertion (10, 20), caractérisé par le fait que ces moyens sont constitués par une bague de retenue (4; 40, 42), qui peut être fixée dans le carter de manière à s'appliquer respectivement sur le collet extérieur (13, 23) comportant la rainure d'insertion, et directement contre la surface frontale, qui reste dégagée dans la rainure d'insertion (10, 20), des rouleaux cylindriques (3, 30).

2. Roulement à rouleaux cylindriques suivant la revendication 1, caractérisé par le fait que la bague de retenue (4; 40, 42) est réalisée sous la forme d'une bague fermée (4, 42) réalisée en un matériau possédant des propriétés élastiques.

3. Roulement à rouleaux cylindriques suivant la revendication 1 ou 2, caractérisé par le fait que dans le cas d'un roulement étanchéifié au moyen d'une bague d'étanchéité (5) ou d'un organe de remplissage (5), la bague de retenue (4, 42) et la bague d'étanchéité (5) ou l'organe de remplissage (5) sont reliés entre eux.

4. Roulement à rouleaux cylindriques suivant une ou plusieurs des revendications 1 à 3, caractérisé par le fait que la bague de retenue (4, 42) prend appui sur l'un des collets (13, 23) et que la surface (11, 14) de ce collet (13, 23) est inégale.

5. Roulement à rouleaux cylindriques suivant une ou plusieurs des revendications 1 à 4, caractérisé par le fait que la surface (14) d'un collet (13, 23) est cintrée avec une forme concave ou convexe.

6. Roulement à rouleaux cylindriques suivant une ou plusieurs des revendications 1 à 5, caractérisé par le fait que la bague de retenue et la bague d'étanchéité sont réalisées d'un seul tenant en matière plastique ou analogue.

7. Roulement à rouleaux cylindriques suivant l'une ou plusieurs des revendications 1 à 6, caractérisé par le fait que la bague de retenue et la bague d'étanchéité sont constituées par une matière plastique à deux composants, une partie (5) étant constituée par une matière plastique plus molle et la partie (42) constituant la bague de retenue étant constituée par une matière plastique plus dure.

8. Roulement à rouleaux cylindriques suivant une ou plusieurs des revendications 1 à 7, caractérisé par le fait que dans le cas de roulements étanches, la bague d'étanchéité (5), la bague de retenue (42) et l'organe de remplissage (5) peuvent être montés dans le roulement sous la forme d'une unité de construction.

9. Procédé pour fabriquer un roulement à rouleaux cylindriques comportant un dispositif de sécurité retenant les roulements cylindriques (3, 3) contre tout déplacement axial au niveau d'une rainure d'insertion (10, 20) de la ou des bagues (1, 2) du roulement suivant une ou plusieurs des revendications 1 à 8, caractérisé par le fait qu'on enfonce sous pression et dans une direction parallèle à l'axe la bague de retenue (4, 42) et éventuellement la bague d'étanchéité (5) ou l'organe de remplissage (50), dans le roulement de manière que la bague de retenue s'applique par sa face tournée vers les rouleaux cylindriques (3), contre la surface frontale des rouleaux cylindriques et soit fixée dans cette position.

10. Procédé suivant la revendication 9, caractérisé par le fait que lors de l'enfoncement de la bague de retenue (4, 42), on applique une pression, dans la direction parallèle à l'axe, aussi bien sur cette bague que sur l'une des bagues de roulement (1 ou 2) et qu'on soutient, sur la face opposée, l'autre bague de roulement respective (1 ou 2).

FIG.1

FIG.2

FIG.3

FIG.4

FIG.5

FIG.6

FIG.7

## FIG.8

## FIG.9

## FIG.10

## FIG.11